# EUROPEAN PATENT APPLICATION

(11) **EP 1 369 871 A2**
(43) Date of publication of application: **10.12.2003**
(21) Application number: 03006935.5
(22) Date of filing: 26.03.2003
(51) Int. Cl.: G11B 27/10, G11B 19/02, H04N 5/783, H04H 1/02, G11C 7/16, H04N 9/804, H04N 9/82, H04N 5/445

(54) **File information reproducing apparatus and file information reproducing method**

(30) Priority: 07.06.2002 JP 2002166860
(71) Applicant: Kabushiki Kaisha Toshiba, Minato-ku, Tokyo 105 (JP)
(72) Inventor: Miyazawa, Akira, 1-chome,Minato-ku, Tokyo 105-8001 (JP)
(74) Representative: Henkel, Feiler, Hänzel

(57) **Abstract**

Information indicative of a full reproduction time of input file information is acquired, the file information is equally divided into a plurality of preset areas in time based on the acquired information, and a requested area among a plurality of the divided areas is selectively reproduced.

## Description

The present invention relates to a reproducing apparatus and a reproducing method to reproduce a video file or an audio file, and more particularly to a file information reproducing apparatus and a file information reproducing method which can reproduce a video file or an audio file recorded on a digital recording medium as typified by a disk, a memory card and the like based on conditions which can be set by a user.

As is well known, in recent years, the spread of a direct-broadcast satellite (DBS) digital broadcasting has enabled high-quality video signals or high-quality audio signals to be supplied from various kinds of distributors.

As a recording apparatus which can record a high-quality digital video signal or a high-quality digital audio signal as a digital signal without making any change, there is widely used a recorder having a built-in hard disk, a DVD-RAM recorder which utilizes a DVD-RAM (Digital Versatile Disk-Random Access Memory) as a recording medium for digital signals, or the like.

Further, in the Internet, it is possible to readily obtain audio files which are compressed in compliance with an MP3 [MPEG (Moving Video Experts Group) -1 Audio Layer 3] compression mode for audio signals or an MPEG-2 AAC (Advanced Audio Coding) compression mode which is a standard for digital broadcasting.

This kind of audio file can be stored in a recording medium for digital signals, e.g., a memory card. It is to be noted that there has appeared a portable player which reproduces an audio file from a memory card having audio files stored therein.

The above-described recording medium for digital signals realizes various functions which are hard to be realized by a recording medium oriented to a recording mode managed by elapse of time as typified by a video tape or an audio cassette tape adopting a known analog mode.

For example, in a recorder having a built-in hard disk, video or audio which has already been recorded can be reproduced independently from elapse of time. Therefore, there is realized a time shift function as typified by a function enabling video reproduction with an arbitrary length from an arbitrary position while recording that video material, a function enabling continuous reproduction of video or audio from a pause position when the pause is canceled after setting the pause with the video or audio being continuously supplied.

Furthermore, as a common characteristic of recording mediums for digital signals capable of digital recording, there is an advantage that rewinding of a file can be instantaneously performed.

In a known recording method using a tape-like medium, when performing rewinding of a file, a tape is generally traveled at a high speed to the vicinity of a reproduction position to which the tape is to be. rewound (from which it is reproduced), or to a preset counter value by an operation of a user. Then, low-speed reproduction or the like is carried out by an operation of the user, and the reproduction position is searched from information near the reproduction position. That is, in the known recording method using the tape medium, a tape (recording medium) must be physically set at a reproduction position.

On the other hand, in a recording medium for digital signals enabling digital recording, e.g., a recorder having a built-in hard disk or a DVD-RAM recorder, a reproduction position of the recording medium does not have to be physically set as different from the tape medium. That is, it is good enough to directly indicate a position from which information is reproduced by using an input device such as an operation panel or a remote controller.

In case of dynamically searching the reproduction position, however, such search is enabled by fast-forward or rewind of a tape in a mode using a tape medium, but a mode which changes a speed of reproducing video or audio forms a main stream in the recording medium for digital signals because it does not have a concept of fast-forward or rewind. By this means, discontinuous video or audio is reproduced in many cases.

In order to prevent the discontinuous video or audio from being reproduced, there has been made many proposals to determine a reproduction position specified by a user as a reference and enable dynamic fast-forward or rewind of video or audio in the vicinity of that position when reproducing video or audio from a recording medium for digital signals as typified by a recorder having a built-in hard disk or a memory card.

For example, there has been proposed a function which enables skip to a specified reproduction position if the reproduction position which is to be dynamically searched in one file is specified by a user in advance. In order to enable this function, however, a user must set the reproduction position in advance. Therefore, the user must grasp the reproduction position to be specified in advance, which is not practical in view of complication.

Moreover, there has been proposed a function which performs skip for a fixed time when skip is directed. However, a time defined as an interval to be skipped is constant irrespective of a length of a file. Therefore, there is a problem that an interval to be skipped is relatively long in a short file whilst an interval to be skipped is relatively short in a long file.

As described above, the conventional function which can arbitrarily skip to an arbitrary point in a file when reproducing the video or audio by using the digital recording apparatus is not a versatile function with respect to complication of the user operation or files having various lengths.

It is to be noted that Jpn. Pat. Appln. KOKAI No. 2002-125199 discloses that a frame used for special reproduction is selectively extracted from video data, and positional information and information indicative of a display time in original video data of the extracted frame are generated and utilized for special reproduction.

However, this publication does not disclose any resolution of each problem corresponding to complication of the user operation concerning skip or various file lengths described above.

An embodiment according to the present invention provides a file information reproducing apparatus and a file information reproducing method which can realize an efficient skip function with respect to files with various lengths without complicating user operations.

According to one aspect of the present invention, there is provided a file information reproducing apparatus comprising:
an acquisition portion configured to acquire information indicative of a full reproduction time of input file information;
a division portion configured to equally divide the file information into a plurality of preset areas in time based on the information acquired by the acquisition portion; and
a reproduction portion configured to selectively reproduce a requested area among a plurality of the areas divided by the division portion.

According to one aspect of the present invention, there is provided a file information reproducing method comprising:
acquiring information indicative of a full reproduction time of input file information;
equally dividing the file information into a plurality of present areas in time based on the acquired information; and
selectively reproducing a requested area among a plurality of the divided areas.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram for illustrating an embodiment according to the present invention taking a digital broadcasting reception apparatus which has a built-in hard disk and is capable of recording as an example;
FIG. 2 is a view for conceptually illustrating a skip operation for a file in the embodiment;
FIG. 3 is a plan view for illustrating an example of an input device which inputs a skip command for a file in the embodiment;
FIG. 4 is a flowchart for illustrating an example of a skip operation for a file in the embodiment;
FIG. 5 is a flowchart for illustrating another example of the skip operation for a file in the embodiment; and
FIG. 6 is a flowchart for illustrating still another example of the skip operation for a file in the embodiment.

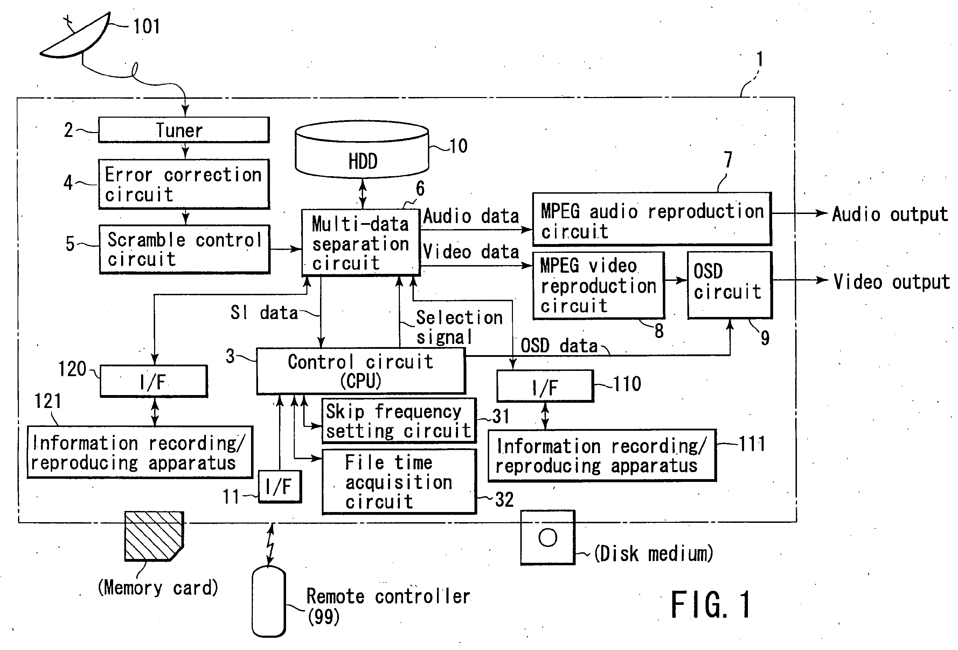

A preferred embodiment according to the present invention will now be described in detail hereinafter with reference to the accompanying drawings. FIG. 1 shows a digital broadcasting reception apparatus 1 which will be described in connection with this embodiment. This digital broadcasting reception apparatus 1 has a function to receive satellite television broadcasting and the like, and a function to record/reproduce digital data such as video or audio with respect to a recording medium.

In this digital broadcasting reception apparatus 1, an arbitrary frequency component in a digital satellite broadcasting signal supplied from a non-illustrated direct-broadcast satellite (DBS) and received from an antenna 101 is selectively taken out by a tuner 2.

It is to be noted that the digital satellite broadcasting signal corresponds programs set to the arbitrary number of channels and individual channels, i.e., video data, audio data and SI information (Service Information) multiplexed from a non-illustrated direct-broadcast station or repeater station in the form of a signal.

A component of an arbitrary channel is selected from the satellite broadcasting signal taken out by the tuner 2 based on a control signal output from a control circuit, i.e., a CPU [Central Processing Unit (a reproduction portion, an acquisition portion, an arithmetic operation portion, a division portion)] 3.

The selected component of the arbitrary channel, i.e., the video data and the audio data are demodulated by a non-illustrated demodulation circuit, and then input to an error correction circuit 4 where they are subjected to error correction.

The component of the arbitrary channel output after error connection by the error correction circuit 4 is supplied to a scramble control circuit 5. If the component of the channel is a signal subjected to scramble processing, it is descrambled.

That is, if the video data and the audio data of the arbitrary channel received through the antenna have been scrambled, scrambling is canceled before separating them into original multiplexed components.

The reception signal of the arbitrary channel descrambled by the scramble control circuit 5 is input to a multi-data separation circuit 6, and it is separated to the arbitrary number of packets based on identification information, i.e., an ID included in a bit stream constituting the reception signal.

Program information separated from the SI information by the multi-data separation circuit 6 (packet on which program information is carried among the arbitrary number of packets) is input to the control circuit (CPU) 3.

In addition, the packet on which the video data is carried is input to an MPEG video reproduction circuit (reproduction portion) 8 using image compression of, e.g., an MPEG mode, and a packet on which the audio data is carried is input to an MPEG audio reproduction circuit (reproduction portion) 7 using audio compression of, e.g., an MPEG-2 mode, respectively.

The video data input to the MPEG video reproduction circuit 8 is decoded from compressed and encoded data by decoding processing, and output to an OSD (On Screen Display) circuit 9 used to superimpose a character or a specific code on that video signal.

It is to be noted that to the OSD circuit 9 is supplied an OSD data signal required for video display in the SI information which is input from the multi-data separation circuit 6 to the control circuit 3 and acquired by the control circuit 3.

The OSD data signal input to the OSD circuit 9 is superimposed on the video signal by the OSD circuit 9, and input to a non-illustrated video display circuit as a reproduction video signal obtained by superimposing a character or a specific code on the video signal.

Although not described in detail, the video display circuit converts the reproduction video signal into a video output signal suitable for a display mode of the video display apparatus connected as a video display device, and reproduces (displays) the video in the connected video display device.

The audio data input to the MPEG audio reproduction circuit 7 is decoded from the compressed and encoded data by decoding processing, amplified according to needs, and output to a non-illustrated audio reproduction apparatus as an audio signal.

To the multi-data separation circuit 6 is connected a hard disk drive (HDD) 10 which can record the video data and audio data. Incidentally, in case of recording the received program in the hard disk drive 10, the control circuit 3 applies content protection to the stream and this stream is output to the hard disk drive 10 together with attribute information of the program.

Additionally, there is provided an information recording/reproducing device 111 capable of recording/reproducing video information or audio information with respect to, e.g., a known DVD-RAM type disk which is a recording medium on which digital signals can be recorded. Further, there is provided an information recording/reproducing device 121 in which a known recording medium, e.g., a memory card on which digital signals can be recorded can be utilized.

It is to be noted that the information recording/reproducing devices 111 and 121 can be connected to the multi-data separation circuit 6 through predetermined interfaces 110 and 120, respectively, and a recording mode or the like relative to the number of these devices or their recording mediums can be arbitrary set.

To the control circuit 3 is connected a remote control interface 11 which receives a command from, e.g., a remote controller (user operation portion) 99 which enables operations by a user at a position distanced from the digital broadcasting reception apparatus 1, and can output a corresponding control signal to the control circuit 3.

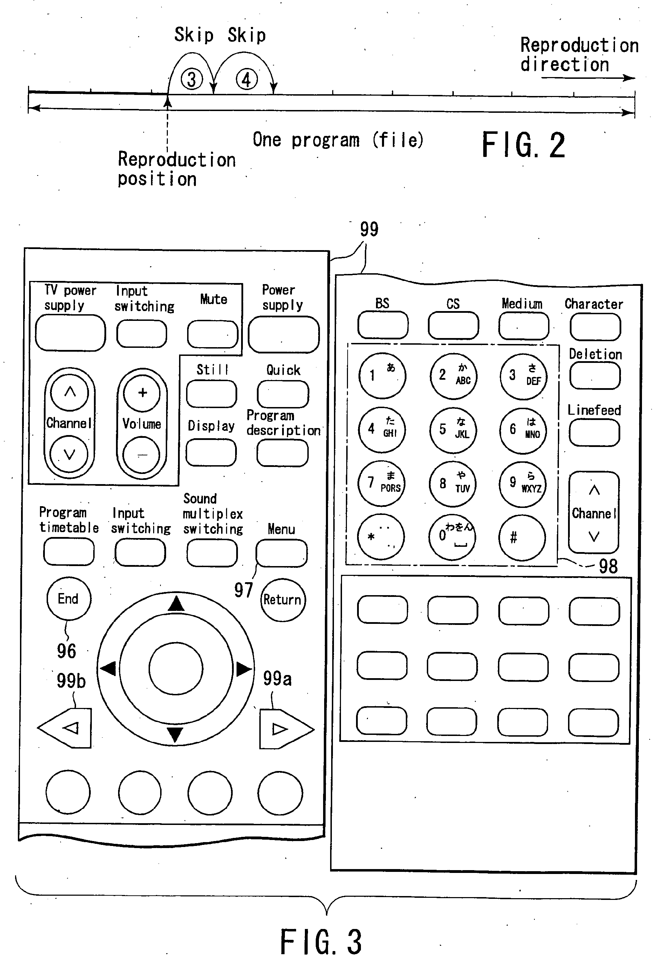

To the remote controller 99 are provided skip buttons (operators) 99a and 99b which can input a skip signal used to skip video or audio recorded on an arbitrary recording medium in a predetermined cycle, as will be described later in connection with, e.g., FIG. 3.

It is to be noted that the skip button 99a can direct the control circuit 3 skip of the video or audio for one skip area in, e.g., a forward direction (direction of elapse of time) every time it is pressed, and the skip button 99b can direct the control circuit 3 skip of the video or the audio for one skip area in, e.g., a backward direction (direction of retracing) every time it is pressed.

To the control circuit 3 is connected a skip frequency setting circuit 31 capable of counting the number of times that skip is directed from the remote controller 99 (capable of identifying whether the skip button is pressed until a predetermined time elapses after turning on the skip button).

Although the detail will be described later, counting the number of times that the skip buttons 99a and 99b have been turned on in a fixed period of time by the skip frequency setting circuit 31 can skip and reproduce a plurality of divided areas which are continuous in time for the number of times of operations in a predetermined time.

To the control circuit 3 is connected a file time acquisition circuit (the acquisition portion, the arithmetic operation portion) 32 which acquires time lengths of all the files in order to skip the video and audio recorded on the recording medium for a predetermined time when skip of the video and audio in the reproduction process is directed by the remote controller 99 or a non-illustrated input key [which is widely known as a jog lever (pad) or a cross switch (pad)] which is often provided at a predetermined position of the main body of the digital broadcasting reception apparatus 1. It is to be noted that the file time acquisition circuit 32 may be provided as firmware of the control circuit 3.

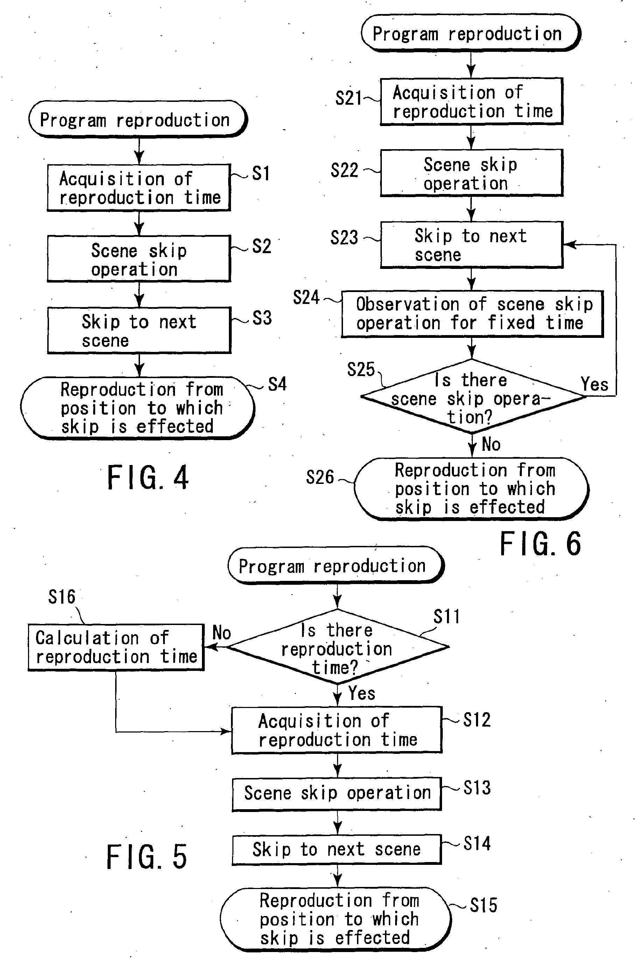

With reference to FIG. 4, description will now be given as to a reproducing method by which a total time of files is divided at a fixed rate and skip is carried out when reproducing the video file and the audio file recorded on a non-tape type recording medium for digital signals by the digital broadcasting reception apparatus shown in FIG. 1.

As shown in FIG. 4, when a scene skip is directed from a user operation portion (remote controller 99) during reproduction of a program, a scene skip portion performs skip from a reproduction position where reproduction is currently carried out to a scene at a position obtained by dividing a time of the entire file at a fixed rate of, e.g., 1/10.

A divisor can be of course arbitrarily set. It is to be noted that, after skip, reproduction starts from a position reached by skip by control of the control circuit 3 functioning as a reproduction start portion.

In detail, when "skip" is directed by a user with a timing shown in FIG. 2 (assuming that the skip key 99a of the remote controller 99 shown in FIG. 3 is pressed for, e.g., one time) at an arbitrary time of reproducing the video and audio recorded in the hard disk drive 10, namely, at a reproduction position, a total reproduction time of one program (file) is obtained by the file time acquisition circuit 32 (S1).

Then, the obtained file total reproduction time is divided based on a preset "skip number", a scene skip enabled state is set, and, e.g., the skip key 99a of the remote controller 99 is pressed for one time. As a result, a top of the next skip area (block ④ in FIG. 2) to be moved, namely, a read position in the recording medium is set from the middle point in the skip area (block ③ in FIG. 2) including the reproduction position at which the video and the audio are currently reproduced (S2).

It is to be noted that the skip number is, e.g., "10" in this example. Further, the processing to acquire the file total reproduction time in the file time acquisition circuit 32 is not carried out only after reproduction of the video or audio recorded in the recording medium is directed, but it may be executed after the later-described skip operation is performed (skip button is turned on).

Subsequently, when the head is actually moved, the read position at which the video and audio are read from the recording medium is skipped to the reproduction position after the directed skip (S3). Then, the video and audio are continuously reproduced from the time (reproduction position) reached by skip at the step S3 (S4).

As described above, with the skip control shown in FIG. 4, it is possible to obtain the function to start reproduction of the video and audio by skipping from the position at which reproduction is currently effected to a scene obtained by dividing the entire file at a given fixed rate.

It is to be noted that the above-described "skip number" can be arbitrarily changed by storing, e.g., a program and an entry (numeric value input) method used to set a skip number in the firm memory.

For example, after displaying a "skip number" setting screen by a specific operation from the remote controller 99 or a menu key 97 which can output a signal which can be used to set data, a numeric value indicative of a "skip number" is input from numeric keys'98 which can input numeric data corresponding to "0" to "9" to the control circuit 3, and a predetermined operation, e.g., turning on an "end" key 96 is performed, thereby changing the "skip number".

Furthermore, as shown in FIG. 3, the user operation portion does not have to be of a one-push type that direct buttons (skip keys 99a and 99b) are provided to the remote controller 99, a jog type or a four-direction integrated arrow pad can be used, and mechanical means is no object.

It is to be noted that the scene skip can be effected from the pause state if the direction of the scene skip from the user operation portion can be input to the control circuit 3. Therefore, the playback process of the recorded video and audio cannot be a condition to start the scene skip operation.

Meanwhile, in order to obtain the above-described file time, the acquisition operation is roughly divided into the following two patterns depending on a type of the recording medium and a format of data.
(A) In the case of video data and audio data having a file time (length), i.e., "reproduction time information" recorded therein, simply reading a file length (reproduction time information) from the recording medium can suffice.
   In this case, the time per one skip can be readily obtained by dividing the "reproduction time (reproduction time information)" by the "skip number" stored in the firm memory or a ROM in the control circuit 3.
   Therefore, when recording of the entire program received through the satellite broadcasting has been already terminated and the file length is specified, or when reproducing the file whose file length (time) is recorded in advance like a recording medium or the like dedicated to reproduction as typified by a CD or a DVD, the time per one skip can be easily obtained by dividing the read file length by the "skip number".
(B) In case of the video data and the audio data whose file time (length), i.e., "reproduction time information is unknown, the file time acquisition circuit (arithmetic operation portion) 32 is used to calculate a bit rate based on, e.g., a data size (data amount) reproduced from the file and the time required to reproduce that size, thereby acquiring the reproduction time (file length) from the file size of the entire program.

It is to be noted that, as a method of calculating the bit rate, an average value of the bit rate calculated by randomly selecting some reproduction positions and reproducing the program for a fixed time can be used. This method is particularly useful when the bit rate greatly varies depending on the reproduction positions.

FIG. 5 illustrates another example of the scene skip shown in FIG. 4. Like the example described in connection with FIG. 4, direction of the scene skip by the user operation portion can judge whether the reproduction time information (file time) was successfully acquired. When it was not acquired, the file time calculation portion calculates the reproduction time based on the file size.

Thereafter, like the example shown in FIG. 4, the scene skip portion enables skip from the reproduction position where reproduction is currently carried out to a scene at a position obtained by dividing the time of the entire file at a fixed rate of, e.g., 1/10. It is to be noted that reproduction is effected from the position reached by skip under the control of the control circuit 3 functioning as reproduction starting means.

In detail, for example, when the scene skip is directed by a user at an arbitrary time that the video and audio are received from the non-illustrated direct-broadcast satellite and reproduction is carried out, i.e., at a reproduction position, the file time of the currently reproduced file, i.e., presence/absence of the reproduction time is detected (S11).

At step S11, if presence of the reproduction time is detected when the scene skip is directed (S11 - Yes), the reproduction time is acquired (S12).

Then, the obtained reproduction time is divided based on the preset "skip number", the scene skip enabled state is set and, e.g., the skip key 99a of the remote controller 99 is pressed for one time. As a result, a top of the next skip area (block ④ in FIG. 2), i.e., the read position in the recording medium to be subsequently reproduced is set from the middle point in the skip area (block ③ in FIG. 2) including the reproduction position at which the video and audio are currently reproduced (S13).

Subsequently, the head is actually moved, and hence the read position at which the video and audio are read from the recording medium is skipped to the reproduction position after the directed skip (S14).

Thereafter, the video and audio are continuously reproduced from the time (reproduction position) to which the scene is skipped at step S13 (S15).

It is to be noted that the reproduction time (file length) is calculated by the file time acquisition circuit 32 if existence of the reproduction time is not detected at step S11 (S11 - No) when the scene skip is directed (S16).

That is, the above-described file time acquisition circuit 32 calculates the bit rate based on, e.g., the data size reproduced from the file and the time required for reproducing the size, thereby acquiring the reproduction time (file length) from the file size of the entire program.

As described above, by the skip control illustrated in FIG. 5, when there is no time information in the file itself, the file time is calculated from the file size, thereby providing the scene skip function.

FIG. 6 illustrates still another example of the scene skip shown in FIG. 4. Although already described in connection with FIG. 4, when a direction of the scene skip is generated from the user operation portion (remote controller 99) during reproduction of the program, the scene skip portion performs skip from the reproduction position at which reproduction is currently carried out to a scene at a position obtained by dividing the time of the entire file at a fixed rate of, e.g., 1/10.

At that time, a scene skip standby portion, i.e., the skip frequency setting circuit 31 checks whether skip is subsequently directed in a fixed period of time. It is needless to say that skip is effected to the reproduction position directed by the last skip command if skip is subsequently directed. Further, if there is no skip command in a fixed period of time, the video and audio are again reproduced from the reproduction position directed and set by the preceding skip command.

In detail, when "skip" is directed by a user, a total time of the file (one program) is obtained (S21).

Then, the scene skip enabled state is set by dividing the obtained file time by the preset "skip number" and, e.g., the skip key 99a of the remote controller 99 is pressed for one time. As a result, a top of the next skip area (block ④ in FIG. 2), i.e., a read position in the recording medium to be subsequently reproduced is set from the middle part in the skip area (block ③ in FIG. 2) including the reproduction position at which the video and audio are currently reproduced (S22).

Subsequently, when the head is actually moved, the read position at which the video and audio are read from the recording medium is skipped to the reproduction position after the directed skip (S23).

At that time, the skip frequency setting circuit 31 checks whether skip is subsequently directed in a fixed period of time (S24). If skip is subsequently directed (S25 - Yes), skip is effected to the reproduction position directed by the last skip command, and whether skip is directed in a fixed period of time is again checked (S24).

On the other hand, if there is no skip command in a fixed period of time (S25 - No), the video and audio are reproduced from the reproduction position directed and set by the preceding skip (S26).

That is, by the skip control shown in FIG. 6, 'since presence/absence of the skip command is detected by the scene skip standby portion in a fixed period of time, the scene can be continuously skipped when skip is subsequently directed.

As described above, in reproduction of the video file and audio file in this embodiment, the apparatus capable of skipping to the scene obtained by dividing the total time of one file at a fixed rate can execute skip in a unit (scene) obtained by dividing one file length (time) at a fixed rate (e.g., 1/10), thereby skipping the scene with respect to the files having various lengths at a uniform rate. Furthermore, providing the dedicated buttons to the remote controller 99 can reduce the complication of the user operations.

Incidentally, although the above has described the example of using the hard disk as a recording medium on which digital signals are recorded in the foregoing embodiment, the present invention is not restricted thereto, and it is needless to say that the present invention can employ any other disk medium or a memory card which can randomly access data, as typified by a DVD-RAM and the like.

Moreover, the present invention is not restricted to the above embodiment, and various modifications/variations can be made without departing from the scope of the invention on the embodying stage. In addition, the respective modifications described in the embodiment can be appropriately combined as long as such combinations are possible, and the advantages from such combinations can be obtained in that case.

## Claims

1. A file information reproducing apparatus **characterized by** comprising:
an acquisition portion (3, 32) configured to acquire information indicative of a full reproduction time of input file information;
a division portion (3, 31) configured to equally divide the file information into a plurality of preset areas in time based on the information acquired by the acquisition portion (3, 32); and
a reproduction portion (3, 7, 8) configured to selectively reproduce a requested area among a plurality of the areas divided by the division portion (3, 31).

2. A file information reproducing apparatus according to claim 1, **characterized in that** the division portion (3, 31) is configured to be capable of changing a divisor of the file information.

3. A file information reproducing apparatus according to claim 1, **characterized in that** the reproduction portion (3, 7, 8) includes an operator (99a, 99b) used to sequentially reproduce a plurality of the areas which are divided by the division portion (3, 31) and continuous in time every time an operation is carried out.

4. A file information reproducing apparatus according to claim 1, **characterized in that** the reproduction portion (3, 7, 8) includes an operator (99a, 99b) used to reproduce a plurality of the areas which are divided by the division portion (3, 31) and continuous in time by performing skip for a number of times of operations carried out in a predetermined time.

5. A file information reproducing apparatus according to claim 1, **characterized in that** the acquisition portion (3, 32) is configured to acquire information indicative of a full reproduction time added to the input file information.

6. A file information reproducing apparatus according to claim 1, **characterized in that** the acquisition portion (3, 32) includes an arithmetic operation portion (3, 32) configured to calculate a full reproduction time from the input file information.

7. A file information reproducing apparatus according to claim 6, **characterized in that** the arithmetic operation portion (3, 32) is configured to calculate a full reproduction time of the file information based on a data rate obtained by reproducing the input file information for a predetermined time and information indicative of an entire data amount added to the file information.

8. A file information reproducing apparatus according to claim 1, **characterized in that** the acquisition portion (3, 32) includes:
a judgment portion (3) configured to judge whether information indicative of a full reproduction time is added to the input file information; and
an arithmetic operation portion (3, 32) configured to calculate a full reproduction time from the file information if it is determined that the information indicative of a full reproduction time is not added by the judgment portion (3).

9. A file information reproducing method **characterized by** comprising:
acquiring information indicative of a full reproduction time of input file information;
equally dividing the file information into a plurality of areas in time based on the acquired information; and
selectively reproducing a requested area among a plurality of the divided areas.

10. A file information reproducing method according to claim 9, **characterized in that** acquisition of the information indicative of a full reproduction time of the input file information includes:
judging whether information indicative of a full reproduction time is added to the input file information; and
calculating a full reproduction time from the file information if it is determined that the information indicative of a full reproduction time is not added.
